# EUROPEAN PATENT SPECIFICATION

(11) **EP 1 068 708 B1**
(45) Date of publication and mention of the grant of the patent: **07.03.2012**
(21) Application number: 99913901.7
(22) Date of filing: 15.03.1999
(51) Int. Cl.: H04L 29/06, H04L 12/28

(54) **COMMUNICATION SYSTEM FOR A CONTROL SYSTEM OVER ETHERNET AND IP NETWORKS**
KOMMUNIKATIONSSYSTEM FÜR EINE STEUERUNGSSYSTEM DURCH ETHERNET UND IP NETZWERKEN
SYSTEME DE COMMUNICATION POUR SYSTEME DE COMMANDE SUR RESEAUX ETHERNET ET IP

(30) Priority: 16.03.1998 US 78223 P
(43) Date of publication of application: 17.01.2001
(73) Proprietor: Schneider Automation Inc., North Andover, Massachusetts 01845-2699 (US)
(72) Inventor: JAMMES, François, F-38700 Corenc (FR)
(74) Representative: Gray, John James
(86) International application number: PCT/US1999/005675
(87) International publication number: WO 1999/048245

(56) References cited:
- EP-A- 0 825 506
- PRESTON D J: "INTERNET PROTOCOLS MIGRATE TO SILICON FOR NETWORKING DEVICES" ELECTRONIC DESIGN, vol. 45, no. 8, 14 April 1997 (1997-04-14), pages 87-90, 92 - 94, XP000730016 ISSN: 0013-4872
- MOSTAFA W ET AL: "A taxonomy of multicast protocols for Internet applications" COMPUTER COMMUNICATIONS, vol. 20, no. 16, 1 January 1998 (1998-01-01), page 1448-1457 XP004113225 ISSN: 0140-3664
- KLESPER T: "DER INTERNET-ZUGRIFF AUFS LON. WELTWEITER ZUGRIFF AUF DIE SENSORIK UND AKTORIK VON AUTOMATISIERUNGS-PROJEKTEN" ELEKTRONIK, vol. 47, no. 8, 14 April 1998 (1998-04-14), page 60, 62, 64, 66 - XP000780190 ISSN: 0013-5658

## Description

### Related Applications

This application claims the benefit of U.S. Provisional Patent Application Serial No. 60/078,223, filed March 16, 1998.

### Technical Field

The present invention generally relates to an industrial automation system for monitoring and controlling field devices within a distributed digital control system. More specifically, the present invention relates to communication networks and protocols for real time communication between and among simple devices, intelligent devices, as well as other devices.

### Background

The use of Ethernet-Internet Protocol (IP) networks is very large - within applications in the Information Technology filed. Up to now, in industrial control and automation applications, Ethernet-IP networks have been used mainly to transfer non time-critical information.

For example, although the HP Ventera range of products uses a publisher/subscriber relationship integrated in the Tibco protocol, the HP Ventura is not optimized for real time automation applications, e.g. not providing any timeliness of published data.

The article by David J Preston in Electronic Design, April 14, 1997 entitled "Internet Protocols Migrate to Silicon For Networking Devices "describes layers of network applications and protocols such as TCP/IP, SNMP, HTTP and RMON and discusses embedding these applications and protocols in computer silicon so that they operate with the network silicon to preprocess and offload a host MPU.

### Summary of the Invention

The present invention is a Distributed Data solution for industrial control over Ethernet-IP networks. The purpose of this invention is to provide means to transfer over an Ethernet-IP network time-critical information between devices participating in a large industrial control or automation solution. Known technology includes the Client/Server relationship using Modbus (PI-MBUS-300) or other traditional messaging application layer protocol. The present invention, by using publisher/subscriber relationship, IP multicasting and broadcasting solutions, and data validation means using timeliness statuses, provides better performance, low cost of devices using this solution, as well as capability for direct communication between devices. Moreover, performance achieved with this solution answers the needs of the most demanding real-time automation applications. In addition, the simplicity of the solution provides capability to integrate it in simple and low cost devices. Furthermore, direct communication between devices reduces the cost of the global application.

This present invention can, therefore, be used in all applications where traditional device buses or fieldbuses are used today (for example, DeviceNet, ControlNet, Fieldbus Foundation, Profibus, Modbus+, WordlFIP, Interbus-S, etc.). Applications of the present invention can include, for example, Industrial Control, Automation, Process Control, Electrical Distribution, Building Automation, and other applications.

The invention provides for a communication system as defined by the appended claims.

Other advantages and aspects of the present invention will become apparent upon reading the following description of the drawings and detailed description of the invention.

### Brief Description of the Drawings

Figure 1 is a block diagram of an intra-level communications network of the present invention.
Figure 2 is a block diagram of the intra-level communications network of Figure 1 having multiple intelligent devices therein.
Figure 3 is a block diagram of an inter-level communications network, of the present invention.
Figure 4 is a block diagram of multiple intra-level communications networks connected through an intra-level core connection of the present invention.
Figure 5 is a block diagram of multiple intra-level communications networks connected through an inter-level core connection of the present invention.
Figure 6 is a block diagram of multiple intra-level communications networks connected through an intra-level core connection, depicting additional connections to other devices and networks of the present invention.
Figure 7 is a block diagram of real time distributed data base (RTDDB) connections of devices on a single cluster of the present invention.
Figure 8 is a block diagram of multiple intra-level communications networks connected through an inter-level core connection and through an intra-level core connection of the present invention.
Figure 9 is a RTDDB data frame encoding layout in accordance with the present invention.
Figure 10 is an A_PDU header layout for the RTDDB data frame encoding layout of Figure 9.
Figure 11 depicts the simple device logical references of an accelerator.
Figure 12 is a layout of the data management of the present invention.
Figure 13 depicts examples of published data frames of the present invention.

### Detailed Description

While this invention is susceptible of embodiment in many different forms, there is shown in the drawings and will herein be described in detail a preferred embodiment of the invention with the understanding that the present disclosure is to be considered as an exemplification of the principles of the invention and is not intended to limit the broad aspect of the invention to the embodiments illustrated.

With reference to the Figures, Ethernet can be used as a device level 1 network (referred to herein as a Ethernet level 1 core) which can include sensor buses and focuses on the need to sample the physical manufacturing environment and to provide real-time data samples to a control level for decision making. Messaging application layer services, such as provided by Modbus, above the internet secured tranport layer-internet network layer (TCP-IP) can be use as a basic solution. For the most demanding applications with high performance requirements, other solutions have been studied and evaluated. The real time distributed data base (RTDDB) solution, using multicasting capabilities of the internet user datagram protocol (UDP) transport layer, makes the best possible use of the Ethernet with high performance. It can be used in addition to, for example, Modbus.

For reference, the following is a glossary of terms used herein: (1) Modbus is a messaging application layer (Read/Write services) used as a basic applicative solution and also used for RTDDB configuration; (2) RTDDB is a new application layer services and protocol specified by the present specification providing efficient communication on Ethernet level 1 network using UDP multicasting capabilities; (3) Agents are network management configured devices; (4) a Manager is a device providing network management configuration to agents; (5) Simple devices usually are directly connected to the process (e.g. to perform measurements, input acquisition, to provide outputs, and the like) They also are agent devices. Examples are input/output (I/O) devices, drives and motor control centers (MCCs); (6) Intelligent devices are programmable. They may be managers. Examples are personal computers (PCs), programable logic controllers (PLCs), specialized programmable devices, Hub Machine Interfaces (HMIs) and gateways; Messaging exchanges are other non RTDDB exchanges in system; (7) Refreshment status is associated with a data sent by a device on the network. It indicates that the data publisher is functioning. Refreshment is useful when communication still cyclically sends data on the network even if the data itself is invalid, because the data publisher is not functioning. Refreshment can use for example a timer, which is set each time the publisher writes data in the communication part of the device and wherein refreshment is valid until the timer expires; (8) Promptness status indicates that the data read from the communication system is not too old. Promptness is useful when the application part of the device still cyclically reads data from its communication part, even if the data itself is invalid, because the network is not functioning. Promptness status uses a timer, which is set each time the network writes data in the communication part of the device and wherein promptness is valid until the timer expires.

On Ethernet level 1 core network, the RTDDB solution is designed to fulfill following needs: intra-level 1 communications (e.g. used for distributed I/Os) and inter-level 1 communications (e.g. used for data exchanges between PCs, PLCs, and the like).

RTDDB communications can be mixed on the same Ethernet physical network, or can be separated depending on the application size and performance. RTDDB communications can also be mixed with, for example, Modbus communications.

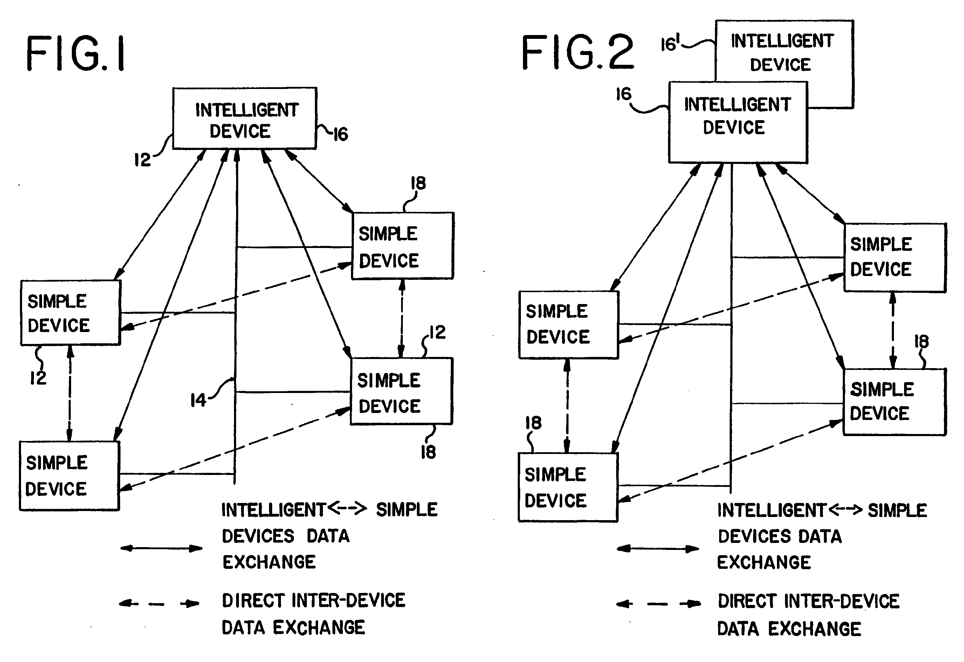

Referring to Figure 1 an example of intra-level communications is depicted. In an embodiment the number of devices 12 on the network 14 is typically between 10 and 50 with a maximum number under 256. The intelligent device 16 on the network sends cyclically to the simple devices 18 commands and the status of simple device outputs. Correspondingly, the simple devices 18 send back to the manager inputs, status, and other information as soon as a change occurs, on event and/or cyclic back-up. Direct communication between devices can also be provided (e.g., synchronization and clock). Intelligent devices can also participate in this direct communication.

Desirably, all RTDDB exchanges have high performance requirements. In an embodiment, the response time from one input change on any device to the corresponding output change on another device is preferred to be around a few ten milliseconds (ms), including input and output device processing, intelligent device processing and network exchanges wherein: processing delays inside simple devices may be a few ms; intelligent devices like PLCs use periodic task, with 15 ms typical period for fastest tasks; network delays may be a few ms, if Ethernet is not overloaded. Moreover, synchronization within this embodiment between output changes on several devices corresponding to one event is preferred to be around a few ms. Clock distribution within this embodiment provides capability for local event datation in devices with a 1 ms accuracy. This is especially useful in electrical distribution systems where each device has an accurate clock, synchronized by the network distributed clock, used for local timestamping of events, which are afterwards centralized for discrimination and edition.

Referring to Figure 2, redundant intelligent devices 16,16' can be used in another embodiment of an intra-level communications network. However, in this embodiment only one intelligent device is active at once, and sends commands to the simple devices 18, while other intelligent devices listen to traffic coming from agents.

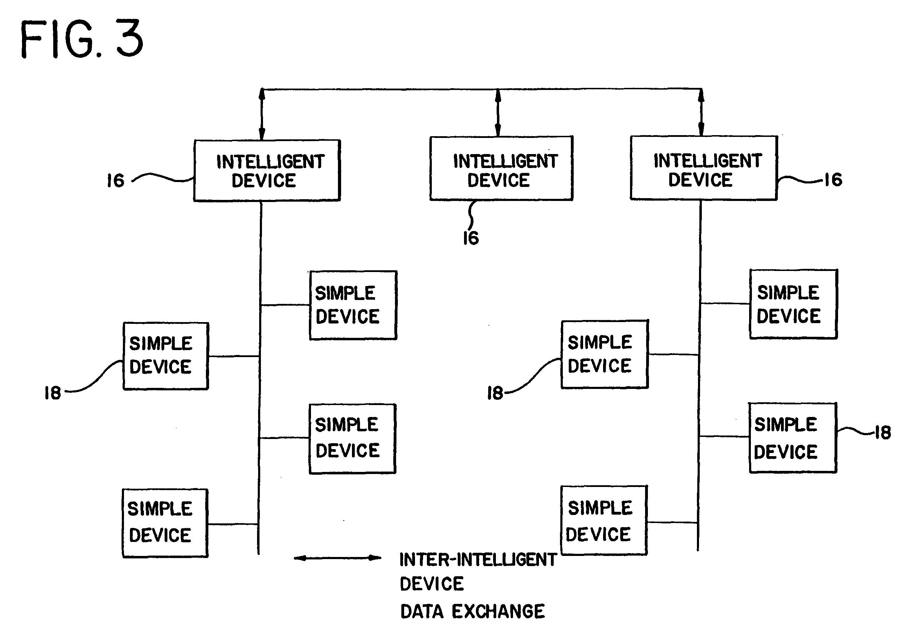

Referring to Figure 3, in an embodiment each intelligent device 16 can have a cluster of up to 256 devices (including intelligent device), exchanging between them inter-level 1 communications. As indicated above, the intelligent devices 16 can be redundant. In a preferred embodiment, the typical number of intelligent devices 16 is between 4 and 16 with the maximum number being under 256.

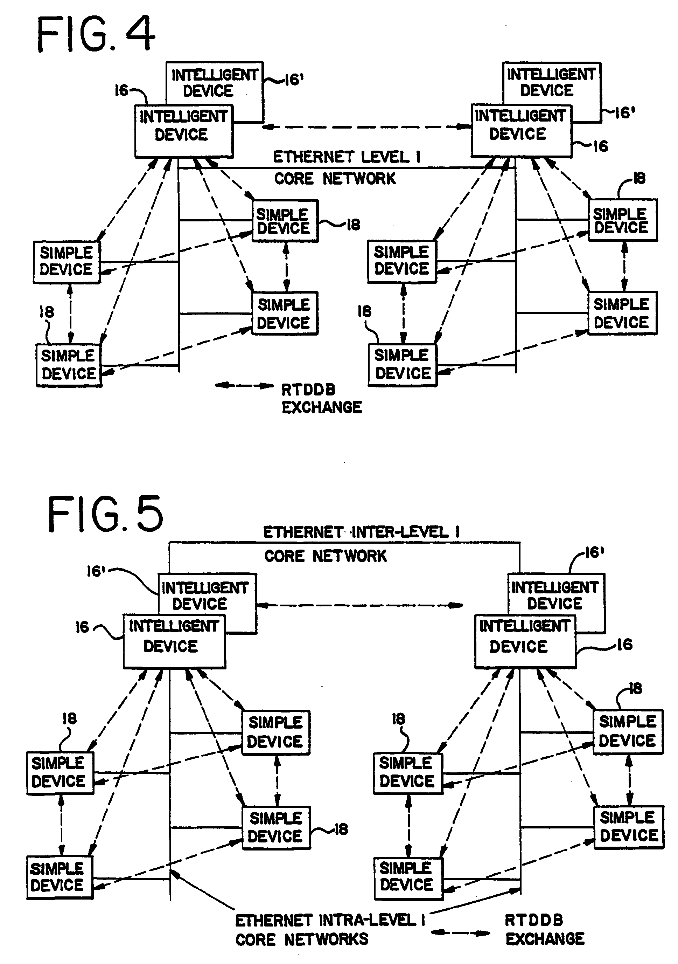

In the embodiment shown in Figure 4, each intelligent device 16 sends cyclically to all other intelligent devices application data (e.g. used for synchronization between applicative tasks). The performance requirements are not so high as for inter-level 1 communications. It has been observed that typically, each intelligent device 16 will send 8 bytes of data every 40 ms, in systems having up to 32 intelligent devices.

Referring to Figure 4, RTDDB intra and inter-level 1 communications can be mixed on the same Ethernet physical network. In addition, referring to Figure 5, they can also be separated on different physical networks, as shown, wherein the choice is made taking into account application size and performance. It should be understood that in either cases, there is no RTDDB communications between simple devices of different clusters.

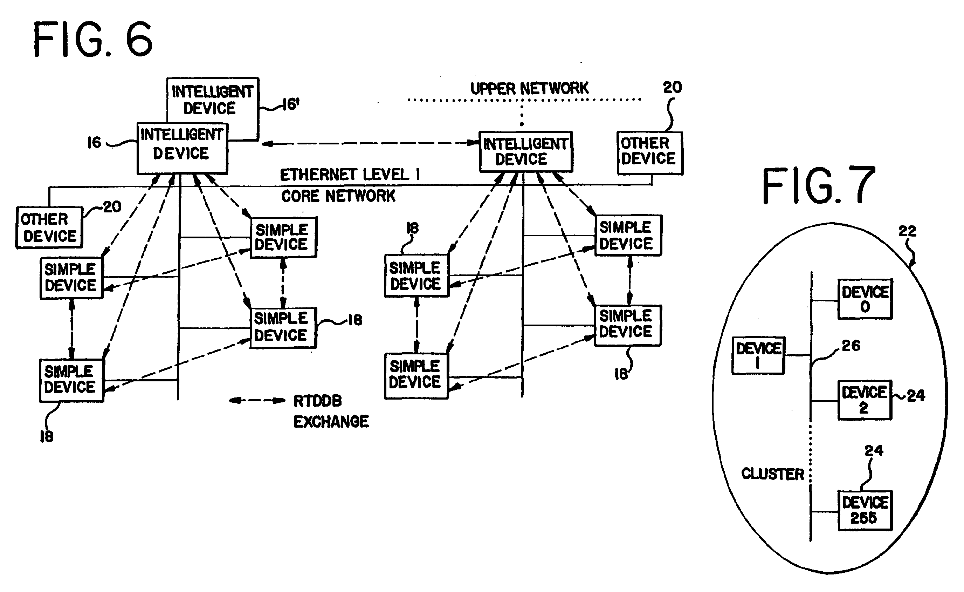

Referring to Figure 6, RTDDB and Modbus communications can be mixed on the same Ethernet physical network along with any kind of other device. In this embodiment, messaging exchanges (Modbus) are not part of the RTDDB exchanges. Messaging exchanges are performed between any device in the networks, including: (1) exchanges with other devices 20 not participating in the RTDDB system, located on the level 1 network or on upper networks; and (2) other exchanges with simple 18 or intelligent devices 16 (e.g. for configuration and the like)

Referring to Figure 7, within a preferred embodiment of a RTDDB system, clusters 22 (only one cluster shown) of up to 256 devices 24 can be defined. Each cluster 22 can contain any types of devices (Intelligent and/or simple). Multiple clusters are possible inside one RTDDB system, and some intelligent devices can belong to several clusters. As stated above, it should be understood that there is no RTDDB communication between devices of different clusters.

Inside each cluster 22, each device 24 publishes RTDDB frames. Frames are published either cyclically or when a change or an event occurs, at the publisher initiative. Frames are sent on the Ethernet network 26, using UDP and IP. Each frame may be sent to one device (using individual IP address), to a group of devices inside a cluster (using group IP multicast address), or to the cluster (using cluster IP multicast address). Groups can be dynamically defined.

In an embodiment, each frame contains one or several data and each device 22 subscribes to data it is interested in. The device in the cluster 22 are individually identified by a logical identification and each data is referenced. Means are also provided for a simple device to know very fast when a frame contains data which it is interested in. A RTDDB frame also contains a fault indication indicating when a fault occurs in the publisher. Each data has an associated refreshment status for indicating the state of the corresponding data producing part of the publisher and each subscriber can also control promptness of received data.

As described above, the RTDDB system can be used to answer intra-level 1 needs wherein the intelligent device (or the active intelligent device in a redundant system) cyclically multicasts a frame which contains individual data (commands, outputs) for a group of simple devices, using their group IP multicast address. The group is defined freely by the intelligent device, taking into account frame size limit.

Each of the simple devices decodes received valid multicast frames to extract data which has been addressed to it. For each data, the simple device controls its refreshment status and sets a promptness timer. When the refreshment status is false or when the timer times-out, the subscriber may enter in a specific operating mode (e.g. set outputs in fallback position).

Similarly, each simple device sends to the intelligent device(s) its published data (e.g., inputs, measures, and the like), using intelligent device IP address (which can be an individual address if there is only one intelligent device or a multicast address if redundant intelligent devices are used). Each simple device can also multicast on the network direct inter-device communication data, using the cluster IP multicast address. Each simple device published data can be sent when a change or an event occurs (e.g. on a digital input change), with a minimum inter-sending period, and/or cyclically. For example, a digital I/O device sends its input values when a change occurs, with a minimum inter-sending period of 10 ms, and cyclically for back-up every 100 ms. In another example, a drive sends the motor speed every 100 ms.

It should be noted that other addresses like sub-network broadcast address which are addressing more devices can be used (if only one cluster is used in the system), but should be used with careful attention because of potential performance impact due to all devices on the network receiving all sub-network broadcast frames and decoding them in software to know if they are interested in each frame. Using specific individual or multicast addresses is preferred because most of the non-interesting frames are filtered by the Ethernet component.

It should also be noted that simple device event driven sending is preferred to cyclic sending as the nominal solution whenever possible because it provides the best possible use of the Ethernet which was designed for event driven transmissions and the fastest response times.

Also as described above, the RTTDB system answers inter-level 1 needs wherein each intelligent device cyclically multicasts a frame which contains application data to be exchanged between intelligent devices, using intelligent device cluster IP multicast address. Each data has an associated refreshment status indicating the state of the corresponding producing part of the manager.

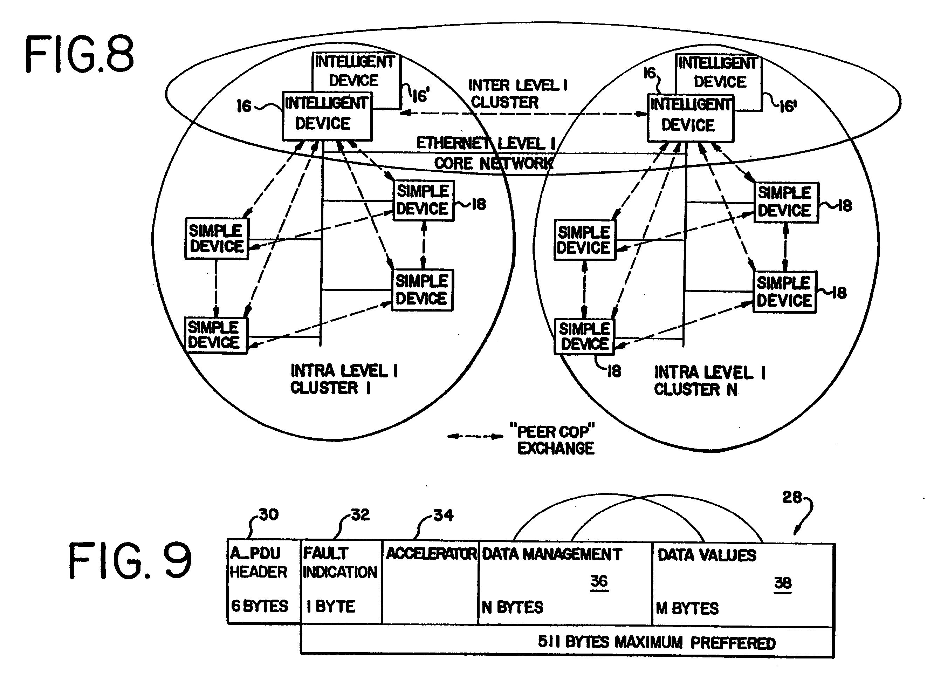

In addition, all intelligent devices interested in this data decode it, control its refreshment status and set a promptness timer. When the refreshment status is false or when the timer times-out, the subscriber may enter in a specific operating mode (e.g. local mode). Referring to Figure 8, this figure depicts how the RTDDB system can be used to answer needs to mix intra and inter-level I communications (as described above).

The preferred aspects of the present invention with regard to initialization, data reference, and RTDDB frame encoding are described, in detail, below. With regard to initialization at each power-up before RTDDB initialization phase, each device preferably has acquired its IP parameters comprising: IP individual address; IP sub-network mask; IP default gateway address. These IP parameters can be acquired by, for example, a Bootstrap Protocol (BOOTP) request to a BOOTP server (e.g. for simple devices) or by local means (e.g. for managers having associated programming tools, HMI). Moreover, attention should be paid to have a coherent configuration in the system (unity of IP addresses, same IP sub-network mask), especially when using local means.

Next, RTDDB configuration information should be acquired comprising: Device logical identification; IP addresses to be used; Timing information; and all data should have a 2 byte reference.

Detailed configuration information contents, as well as how they are acquired, are typically specified in the product specification of each device. However, they are specified hereunder for the following devices: Simple devices used in intra-level 1 communications; Intelligent devices used in intra-level 1 communications; and Intelligent devices used in inter-level 1 communications.

Turning to configuration of the simple devices used in intra-level 1 communications, as soon as each simple device is ready to communicate using, for example, the Modbus protocol over TCP/IP, it waits for its manager (or a global configurator) writing significative values in RTDDB configuration registers before communicating using RTDDB protocol.

In an embodiment, the following registers can be written in each simple device, using Modbus services:

| Modbus services | Configuration registers | Offset in Hex | Size of Field |
|---|---|---|---|
| Read/Write | Logical identification | F201 | 1 word |
| Read/Write | Sending period | F202 | 1 word |
| Read/Write | Minimum inter-sending period | F203 | 1 word |
| Read/Write | Intelligent device IP address | F204-F205 | 2 words |
| Read/Write | Promptness period | F206 | 1 word |
| Read/Write | Receiving IP multicast address | F207-F208 | 2 words |
| Read/Write | Application specific registers | F209 to F3FF | Application specific |

With regard to the configuration resister, logical identification is one word at offset F201. This register can be read and written using, for example, Modbus commands, and the default value (at power up) is FF FFh (not configured for RTDDB). The significative RTDDB values are comprised between 0 and 255. As soon as a significant value is written in this register, the simple device starts using RTDDB. When other values (first byte not equal to 0) are written in this register, the simple device stops using RTDDB.

For the simple device first published data, its sending period is specified by the sending period register. Other periods for other published data can be specified in application specific registers. Preferably, the sending period is one word at offset F202. This register can be read and written using, for example, Modbus commands, and the default value (at power up) is FF FFh (no periodic broadcast). The sending period is in increments of 1 ms. Preferably, its minimum value is 5 ms.

The minimum inter-sending period for the simple device first published data is specified by the minimum inter-sending period register. Other periods for other published data can be specified in application specific registers. Minimum inter-sending period is one word at offset F203. This register can be read and written using, for example, Modbus commands, and the default value (at power up) is FF FFh (no sending on change). The minimum inter-sending period is in increments of 1 msec. Preferably, its minimum value is 10 ms.

Data are sent to the intelligent device(s) using this intelligent device IP address. The default value is the IP address of the first Modbus client of the agent (most often its manager). This value can be changed by a manager at any time. Individual address should be written in these registers, if there is no redundant intelligent device. Multicast address should be written in these registers, if redundant intelligent devices are used.

For the simple device first subscribed data its promptness period is specified by the promptness period register. Other periods for other subscribed data may be specified in application specific registers. Preferably, the promptness period is one word at offset F204. This register can be read and written using, for example, Modbus commands, and the default value (at power up) is 250 (250 ms). The promptness period is in increments of 1ms. FF FFh value means no promptness control. Its minimum value preferably is 15 ms.

With regard to receiving IP multicast address, simple devices receive data on their own individual IP address, on the sub-network broadcast address and on the receiving IP multicast address applicable to a group of agents inside the cluster. There is no IP multicast address specified at power up. A new value can be taken into account only when RTDDB is stopped.

Turning to configuration of the intelligent devices used in intra-level I communications, after having acquired its IP parameters, each manager gets its configuration information, by local means (e.g. programming tools or HMI) or by requesting it to a global configurator. Desirably, the following configuration information is acquired to start RTDDB communications: (1) Intelligent device logical identification inside the intra-level 1 cluster; (2) IP addresses of the simple devices of the cluster and correspondence with their logical identifications; (3) Simple device group IP multicast addresses used to send frames to the simple device groups of the cluster; (4) Intelligent device group IP multicast address used to receive frames from the simple devices (if redundant managers are used); and (5) Cluster IP multicast address, if using direct inter-device communication.

Turning to configuration of the intelligent devices used in inter-level 1 communications, after having acquired its IP parameters, each manager gets its configuration information, by local means (e.g. programming tools or HMI) or by requesting it to a global configurator. Such configuration information preferably includes: (1) Intelligent device logical identification inside the inter-level 1 cluster; (2) Inter-level 1 IP multicast address to exchange data with other intelligent devices (default value is the sub-network broadcast address); and (3) lengths and periods of application data sent to other managers. Desirably, by default, only one application data (physical reference first byte 80h) of 8 bytes length is sent to other managers every 4 ms.

Each data inside the RTDDB system preferably has a 2 byte reference. In an embodiment, two types of reference can be used: Physical reference and logical reference. Physical reference is used where the second byte of the 2 byte reference is the device logical identification of one of the devices participating in the exchange. The first byte of the reference indicates which device data is addressed. Data syntax and semantic are specified by the device specification. Physical reference is very useful in the following exchanges, where this reference type provides automatic data reference configuration, as soon as device logical identifications are configured: (1) exchange with a simple device (e.g. data sent or received by a simple device), in which data can be sub-classified in applicative data (I/O values, measurements, commands, and the like) and system data (configuration, parameters, status, default, and the like); (2) data sent by an intelligent device to other intelligent devices.

Logical reference is where there is no reference to any device logical identification. Logical reference sub-types are defined as universal logical reference and dynamically assigned logical reference.

Universal logical reference is where data reference, syntax and semantic are specified by the present specification. This type of reference is useful for data which may be used in every systems (e.g., clock and the like). Dynamically assigned logical reference is where any means can be used to assign reference to data, which can be of any type.

The following table specifies range of values reserved for each reference type:

| Reference type | First byte | Second byte | Use | Use example |
|---|---|---|---|---|
| Physical reference | 01h to 3Fh odd values | Simple device logical identification | Applicative data sent to a simple device | Intelligent device --> Simple device in intra-level 1 communication |
| | 41h to 7Fh odd values | Simple device logical identification | System data sent to a simple device | Intelligent device --> Simple device in intra-level 1 communication |
| | 00h to 3Eh even values | Simple device logical identification | Applicative data sent by a simple device | Simple device --> Intelligent device in intra-level I communication |
| | 40h to 7Eh even values | Simple device logical identification | System data sent by a simple device | Simple device --> Intelligent device in intra-level I communication |
| | 80h to 8Fh | Intelligent device logical identification | Data sent by an intelligent device | Intelligent device --> Intelligent devices in inter-level 1 communication |
| Logical reference | 9000h to 9FFFh | 9000h to 9FFFh | Data with universal reference (clock...) | Direct inter-device communication in intra or inter-level 1 communication |
| Logical reference | A000h to FFFFh | A000h to FFFFh | Data with dynamically assigned reference | Any communication |

It should be noted that different data inside a cluster should have different data reference. Same data reference can be used for data of different clusters inside a RTDDB system.

Turning to the subject of RTDDB frame encoding, each device can publish RTDDB frames that are sent on the Ethernet network using UDP and IP. The frames are published either cyclically or when a change or an event occurs. Each frame can be sent to one device using individual IP address, to a group of devices using inside the network segment using group IP multicast address, or to the network segment using sub-network IP broadcast address. Further, groups can be dynamically defined.

As indicated above, each frame contains one or several data and each device subscribes to data it is interested in. Moreover, each device on the network segment is preferably identified by a logical identification and each data is referenced.

A fault indication is provided by each frame for indicating when a fault occurs in the publisher. Furthermore, each data has an associated refreshment status, which can indicate the state of the corresponding data producing part of the publisher. Each subscriber can control promptness of received data.

A network manager, using messaging services or other communication services makes an RTDDB configuration of each device. RTDDB configuration includes device logical identifications, data references, timing information and IP multicast addresses. Preferably, all devices participating in the RTDDB system have the same IP sub-network address. Also, it is desirable that no router be used inside the RTDDB system.

Turning to Figure 9, the application part 28 of the published frame is composed of five different fields: (1) A_PDU header 30; (2) Fault Indication 32; (3) Accelerator 34; (4) Data management field 36; (5) and Data value field 38.

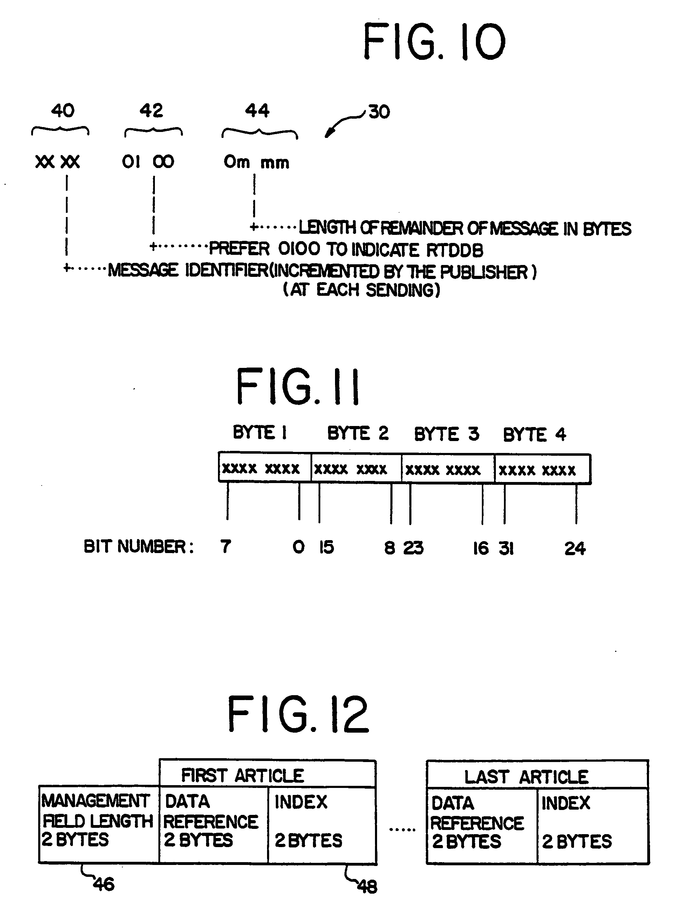

Figure 10 shows the preferred embodiment of A_PDU header 30 having a message indicator 40, RTDDB indicator 42, and message length indicator 44.

Regarding fault indication, each frame contains a fault indication indicating when a fault occurs in the publisher device. A value different from 0 indicates a fault. The encoding of this byte is application specific. This indication can be used to indicate very fast to other devices participating in the application that a fault occurs (e.g. fast indication of a watch-dog fault in a simple device, sent to the intelligent device, or fast indication of an intelligent device in local mode, sent to other intelligent devices).

The accelerator field 34 is used to provide capability to know very fast and easily if data may be addressed to a device in the rest of the frame. This accelerator is especially useful in simple devices. This field is preferably a 5 byte synthesis of all the data references included in the frame:

| | |
|---|---|
| Data reference types 1 byte | Simple device logical references 4 bytes |

The first byte, Data reference types, is a string of 8 bits indicating with types of data references are used in the frame, based on the first byte of each data reference:

| | |
|---|---|
| Bits set to 1 in data reference types byte | Indicating that at least one data reference first byte has a value: |
| Bit7 | 01h to 3Fh odd values |
| Bit6 | 41 h to 7Fh odd values |
| Bit5 | 00h to 3Eh even values |
| Bit4 | 40h to 7Eh even values |
| Bit3 | 80h to 8Fh |
| Bit2 | 90h to 9Fh |
| Bit1 | A0h to FFh |

| | |
|---|---|
| Bit0 is set to 0. | |

If bit7 or bit6 of previous byte is set to 1, the four following bytes (byte1 to byte4 shown in Figure 11) are a string of 32 bits, indicating which logical identification group are addressed (corresponding bits are set to 1). For example, bit0 indicates that at least one device having logical identification 0 to 7 is addressed, bit indicates that at least one device having logical identification 8 to 15 is addressed, ... bit31 indicated that at least one device having logical identification 248 to 255 is addressed. If bit7 and bit6 of previous byte are set to 0, byte1 to byte 4 are set to 0.

The data management field preferably has the structure identified in Figure 12. The management field length 46 gives the length of the remainder of the data management field in bytes. For each data, an index (2 bytes word 48) gives the position of the data value: This is the byte number since the beginning of the data management field and before the first data byte (not included).

Preferably, each data has the following structure: n dl ....dn rf, wherein n equals the length of data in bytes (limiting the data length to 25 5 bytes), dl equals the value of the first byte (first data byte), dn equals the value of the last byte (last data byte), rf equals the refreshment status which may indicate the state of the corresponding data producing part of the publisher: xxxx xxx0 when invalid, and xxxx xxx1 when valid, where x means application specific. Moreover, each subscriber can control promptness of received data.

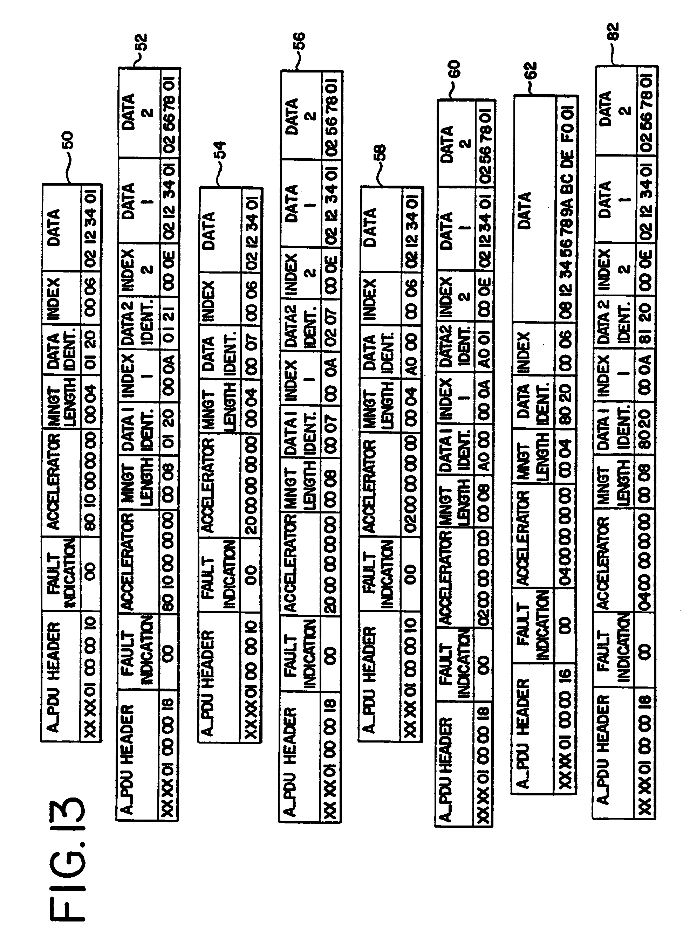

Figure 13 depict examples of published frames. In particular, reference number 50 depicts an Application Layer frame to send to one simple device, at logical identification 32, one fresh data of one word with physical reference first byte 01, without any fault. Reference number 52 shows an Application Layer frame to send to two simple devices, at logical identifications 32 and 33, one fresh data of one word with physical reference first byte 01, without any fault. Reference number 54 depicts an Application Layer frame to send by a simple device, at logical identification 07, one fresh data of one word with physical reference first byte 00, without any fault. Reference number 56 illustrates an Application Layer frame to send by a simple device, at logical identification 07, two fresh data of one word with physical reference first byte 00 and 02, without any fault. Reference number 58 illustrates an Application Layer frame to send by a device one fresh data of one word with logical reference A000h, without any fault. Reference number 60 depicts an Application Layer frame to send by a device two fresh data of one word with logical reference A000h and A001h, without any fault. Figure 62 shows an Application Layer frame to send by an intelligent device at logical identification 32, to other intelligent devices, one fresh default data of 8 bytes with physical reference first byte 80, without any fault. Figure 82 depicts an Application Layer frame to send by an intelligent device at logical identification 32, to other intelligent devices, two fresh data of one word with physical reference first byte 80 and 81, without any fault.

It should be noted that this structure provides addressing capability for 32 data, each one having up to 4 application words, (application frame length of 458 bytes, without A_PDU), or 8 data with 16 application words and 24 data with 1 application word (total frame length of 504 bytes, without A_PDU).

In an embodiment, a communications adapter can be provided for interfacing between a transfer body, which can be a part of the simple device, and the communications network having the simple devices and each intelligent device connected thereto. The transfer body includes a plurality of transfer registers for communicating data relating to field devices, and an identification register for identifying the data relating to the field devices. Moreover, an interface portion is provided having an identification port communicating with the identification register, a transfer port communicating with the transfer registers, wherein the transfer body is adapted to directly attach to and communicate with each intelligent device through the interface portion. Furthermore, the communications, adapter can be removably attached to the transfer body through the transfer port and the identification port, wherein the communications adapter is configured to communicate with a specific type of intelligent device. Such a communication adapter is disclosed in, for example, U.S. Patent Application Serial No. 09/036,565, filed March 9, 1998.

While the specific embodiments have been illustrated and described, numerous modifications come to mind without significantly departing from the scope of the invention which is only limited by the scope of the accompanying Claims.

## Claims

1. An industrial automation communication system for communication within a control system, the communication system using a publisher/subscriber relationship, the industrial automation communication system comprises:
a plurality of input/output devices (18) connected to a first intra-level industrial communications network, each input/output device adapted to exchange data with the other input/output devices within the first intra-level industrial communications network,
at least one programmable logic controller (16) connected to the first intra-level industrial communications network, each programmable logic controller being adapted to exchange data with each input/output device on the first intra-level industrial communications network;
a plurality of input/output devices connected to a second intra-level industrial communications network, each input/output device being adapted to exchange data with the other input/output devices within the second intra-level industrial communications network,
at least one programmable logic controller connected to the second intra-level industrial communications network, each programmable logic controller being adapted to exchange data with each input/output device on the second intra-level industrial communications network; and,
an intra-level core connector adapted to connect the first intra-level communications network to the second intra-level communications network;
wherein the plurality of input/output devices (18) connected to the first and second intra-level industrial communications networks are further configured for sending at least one frame on the first and second intra-level industrial communications networks using internet user datagram transport protocol and internet protocol, **characterized in that** the at least one frame including an accelerator field (34) comprising a string of bits, wherein each bit of the string of bits is associated with a different plurality of logical device identifications, whereby the value of each of the plurality of bits indicates whether the at least one frame is associated with the corresponding plurality of logical device identifications so that a device can quickly determine if data is addressed to that device in the rest of the at least one frame.

2. The communication system of claim 1 wherein the frame is sent to a device connected to the first intra-level network using individual internet protocol address.

3. The communication system of claim 1 wherein the frame is sent to a group of devices connected to the first intra-level network using group internet protocol multicast address.

4. The communication system of claim 1 wherein the frame is sent to all devices connected to the first intra-level network using cluster internet protocol multicast address.

5. The communication system of claim 1 wherein the frame is published cyclically.

6. The communication system of claim 1 wherein the frame is published when a predetermined event occurs.

7. The communication system of claim 1 wherein the frame contains data and some of the devices connected to the first intra-level network subscribe to the data.

8. The communication system of claim 1 wherein the frame is received by a device connected to the first intra-level network having a refreshment status and a promptness timer responsive to data received.

9. The communication system of claim 1 wherein the frame includes an indication field (32), and a management field (36) for decoding the frame.

10. The communication system of claim 1 wherein the input/output devices are initially set to a default configuration for minimizing communication on the network.

11. The communication system of any preceding claim wherein the frame comprises a real time distributed data base (RTDDB) frame.

## Patentansprüche

1. Ein Industrieautomations-Kommunikationssystem für die Kommunikation innerhalb eines Steuersystems, wobei das Kommunikationssystem eine Publisher-Subscriber-Beziehung verwendet, wobei das Industrieautomations-Kommunikationssystem Folgendes beinhaltet:
eine Vielzahl von Eingabe-/Ausgabevorrichtungen (18), die mit einem ersten Intra-Level-Netz zur industriellen Kommunikation verbunden sind, wobei jede Eingabe-/Ausgabevorrichtung angepasst ist, um innerhalb des ersten Intra-Level-Netzes zur industriellen Kommunikation Daten mit den anderen Eingabe-/Ausgabevorrichtungen auszutauschen;
mindestens eine PLC-Steuerung (16), die mit dem ersten Intra-Level-Netz zur industriellen Kommunikation verbunden ist, wobei jede PLC-Steuerung angepasst ist, um auf dem ersten Intra-Level-Netz zur industriellen Kommunikation Daten mit jeder Eingabe-/Ausgabevorrichtung auszutauschen;
eine Vielzahl von Eingabe-/Ausgabevorrichtungen, die mit einem zweiten Intra-Level-Netz zur industriellen Kommunikation verbunden sind, wobei jede Eingabe-/Ausgabevorrichtung angepasst ist, um innerhalb des zweiten Intra-Level-Netzes zur industriellen Kommunikation Daten mit den anderen Eingabe-/Ausgabevorrichtungen auszutauschen;
mindestens eine PLC-Steuerung, die mit dem zweiten Intra-Level-Netz zur industriellen Kommunikation verbunden ist, wobei jede PLC-Steuerung angepasst ist, um auf dem zweiten Intra-Level-Netz zur industriellen Kommunikation Daten mit jeder Eingabe-/Ausgabevorrichtung auszutauschen; und
einen Intra-Level-Kern-Anschluss, der angepasst ist, um das erste Intra-Level-Netz zur Kommunikation mit dem zweiten Intra-Level-Netz zur Kommunikation zu verbinden;
wobei die Vielzahl von mit dem ersten und zweiten Intra-Level-Netz zur industriellen Kommunikation verbundenen Eingabe-/Ausgabevorrichtungen (18) ferner konfiguriert sind, um unter Verwendung von Internetnutzer-Datagrammtransportprotokoll und Internet-Protokoll mindestens einen Rahmen auf dem ersten und zweiten Intra-Level-Netz zur industriellen Kommunikation zu senden, **dadurch gekennzeichnet, dass** der mindestens eine Rahmen ein Beschleunigerfeld (34) umfasst, das eine Bitfolge beinhaltet, wobei jedes Bit der Bitfolge mit einer anderen Vielzahl von logischen Vorrichtungsidentifikationen assoziiert ist, wobei der Wert von jedem der Vielzahl von Bits angibt, ob der mindestens eine Rahmen mit der entsprechenden Vielzahl von logischen Vorrichtungsidentifikationen assoziiert ist, so dass eine Vorrichtung schnell bestimmen kann, ob Daten in dem Rest des mindestens einen Rahmens an diese Vorrichtung adressiert sind.

2. Kommunikationssystem gemäß Anspruch 1, wobei der Rahmen unter Verwendung einer individuellen Internet-Protokoll-Adresse an eine mit dem ersten Intra-Level-Netz verbundene Vorrichtung gesendet wird.

3. Kommunikationssystem gemäß Anspruch 1, wobei der Rahmen unter Verwendung einer Gruppen-Internet-Protokoll-Multicast-Adresse an eine mit dem ersten Intra-Level-Netz verbundene Gruppe von Vorrichtungen gesendet wird.

4. Kommunikationssystem gemäß Anspruch 1, wobei der Rahmen unter Verwendung einer Cluster-Internet-Protokoll-Multicast-Adresse an alle mit dem ersten Intra-Level-Netz verbundenen Vorrichtungen gesendet wird.

5. Kommunikationssystem gemäß Anspruch 1, wobei der Rahmen zyklisch veröffentlicht wird.

6. Kommunikationssystem gemäß Anspruch 1, wobei der Rahmen veröffentlicht wird, wenn ein vorbestimmtes Ereignis auftritt.

7. Kommunikationssystem gemäß Anspruch 1, wobei der Rahmen Daten enthält und einige der mit dem ersten Intra-Level-Netz verbundenen Vorrichtungen die Daten abonnieren.

8. Kommunikationssystem gemäß Anspruch 1, wobei der Rahmen von einer mit dem ersten Intra-Level-Netz verbundenen Vorrichtung mit einem Auffrischungsstatus und einem Bereitmeldungszeitgeber, reagierend auf empfangene Daten, empfangen wird.

9. Kommunikationssystem gemäß Anspruch 1, wobei der Rahmen ein Anzeigefeld (32) und ein Verwaltungsfeld (36) zum Decodieren des Rahmens umfasst.

10. Kommunikationssystem gemäß Anspruch 1, wobei die Eingabe-/Ausgabevorrichtungen anfangs auf eine Standard-Konfiguration zum Minimieren von Kommunikation auf dem Netz eingestellt sind.

11. Kommunikationssystem gemäß einem der vorhergehenden Ansprüche, wobei der Rahmen einen Verteilte-Echtzeit-Datenbank-Rahmen (RTDDB-Rahmen) beinhaltet.

## Revendications

1. Un système de communication et d'automatisation industrielles pour la communication au sein d'un système de contrôle, le système de communication utilisant une relation éditeur / abonné, le système de communication et d'automatisation industrielles comprend :
une pluralité de dispositifs d'entrée / de sortie (18) connectés à un premier réseau de communications industrielles intra-niveau, chaque dispositif d'entrée / de sortie étant conçu pour échanger des données avec les autres dispositifs d'entrée / de sortie au sein du premier réseau de communications industrielles intra-niveau ;
au moins un contrôleur à logique programmable (16) connecté au premier réseau de communications industrielles intra-niveau, chaque contrôleur à logique programmable étant conçu pour échanger des données avec chaque dispositif d'entrée / de sortie sur le premier réseau de communications industrielles intra-niveau ;
une pluralité de dispositifs d'entrée / de sortie (18) connectés à un deuxième réseau de communications industrielles intra-niveau, chaque dispositif d'entrée / de sortie étant conçu pour échanger des données avec les autres dispositifs d'entrée / de sortie au sein du deuxième réseau de communications industrielles intra-niveau ;
au moins un contrôleur à logique programmable connecté au deuxième réseau de communications industrielles intra-niveau, chaque contrôleur à logique programmable étant conçu pour échanger des données avec chaque dispositif d'entrée / de sortie sur le deuxième réseau de communications industrielles intra-niveau ; et
un connecteur de coeur intra-niveau conçu pour connecter le premier réseau de communications intra-niveau au deuxième réseau de communications intra-niveau ;
dans lequel la pluralité de dispositifs d'entrée / de sortie (18) connectés aux premier et deuxième réseaux de communications industrielles intra-niveau sont en outre configurés pour envoyer au moins une trame sur les premier et deuxième réseaux de communications industrielles intra-niveau à l'aide d'un protocole de transport UDP (User Datagramme Protocol) internet et d'un protocole internet, **caractérisé en ce qu'**au moins une trame incluant un champ accélérateur (34) comprend une chaîne de bits, chaque bit de la chaîne de bits étant associé à une pluralité différente d'identifications logiques de dispositifs, grâce à quoi la valeur de chaque bit de la pluralité de bits indique si l'au moins une trame est associée à la pluralité correspondante d'identifications logiques de dispositifs de façon à ce qu'un dispositif puisse déterminer rapidement si des données sont adressées à ce dispositif dans le reste de l'au moins une trame.

2. Le système de communication de la revendication 1 dans lequel la trame est envoyée à un dispositif connecté au premier réseau intra-niveau à l'aide d'une adresse de protocole internet individuelle.

3. Le système de communication de la revendication 1 dans lequel la trame est envoyée à un groupe de dispositifs connectés au premier réseau intra-niveau à l'aide d'une adresse multidestinataire de protocole internet de groupe.

4. Le système de communication de la revendication 1 dans lequel la trame est envoyée à tous les dispositifs connectés au premier réseau intra-niveau à l'aide d'une adresse multidestinataire de protocole internet de grappe.

5. Le système de communication de la revendication 1 dans lequel la trame est éditée de façon cyclique.

6. Le système de communication de la revendication 1 dans lequel la trame est éditée lorsqu'un événement prédéterminé se produit.

7. Le système de communication de la revendication 1 dans lequel la trame contient des données et certains des dispositifs connectés au premier réseau intra-niveau s'abonnent aux données.

8. Le système de communication de la revendication 1 dans lequel la trame est reçue par un dispositif connecté au premier réseau intra-niveau présentant un statut de rafraîchissement et une minuterie de promptitude sensibles à des données reçues.

9. Le système de communication de la revendication 1 dans lequel la trame inclut un champ d'indication (32), et un champ de gestion (36) pour décoder la trame.

10. Le système de communication de la revendication 1 dans lequel les dispositifs d'entrée / de sortie sont initialement réglés sur une configuration par défaut pour minimiser la communication sur le réseau.

11. Le système de communication de n'importe quelle revendication précédente dans lequel la trame comprend une trame de base de données distribuées en temps réel (RTDDB).
